(19)

Europäisches
Patentamt
European
Patent Office
Office européen
des brevets

(11) **EP 2 053 287 A1**

(12) **EUROPEAN PATENT APPLICATION**

(43) Date of publication:
**29.04.2009 Bulletin 2009/18**

(51) Int Cl.:
***F16J 15/32*** *(2006.01)*

(21) Application number: **08015692.0**

(22) Date of filing: **05.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.10.2007 JP 2007277271**

(71) Applicant: **Mitsubishi Cable Industries, Ltd.**
**Chiyoda-ku**
**Tokyo (JP)**

(72) Inventors:
• **Ashida, Tetsuya**
**Amagasaki-shi**
**Hyogo (JP)**
• **Oida, Hironori**
**Arida-shi**
**Wakayama (JP)**

(74) Representative: **HOFFMANN EITLE**
**Patent- und Rechtsanwälte**
**Arabellastrasse 4**
**81925 München (DE)**

(54) **Rotation shaft seal**

(57)    A rotation shaft seal in which a plate-shaped supporting piece (5), supporting a seal element (3) from a low-pressure side (6), has an axis-orthogonal wall portion (10), a sloped wall portion (12), and an inner peripheral end flat wall portion (13) at right angles with an axis ($L_2$) in cross section cut at a plane including the axis ($L_2$) of the rotation shaft (2).

Fig. 1

**Description**

This invention relates to a rotation shaft seal.

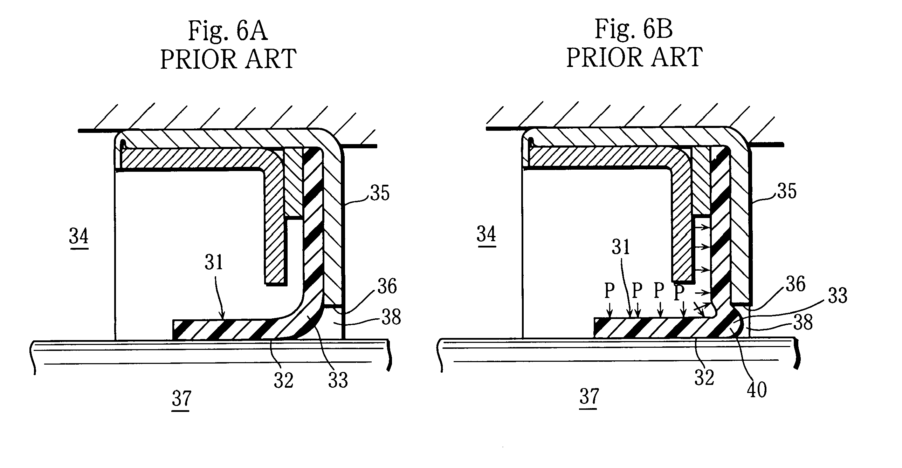

Conventionally, a rotation shaft seal having a seal element 31 composed of PTFE as shown in Figures 6A and 6B is known. And, another rotation shaft seal, having a similar seal element disclosed by Japanese patent provisional publication No. 2003-194231, is known.

In these rotation shaft seals, great abnormal abrasion may be generated locally in a curved portion 33 when sealed fluid (including gas) has high pressure, or when surrounding portions (especially a sliding face 32) has high temperature and strength of the seal element 31 is reduced. Further, when pressure P in a sealed fluid chamber 34 is high, the curved portion 33 (in a normal state of Figure 6A) generates deformation 40 locally (and excessively) as shown in Figure 6B for insufficient strength of the seal element 31, the curved portion 33 deviates from a gap portion 38 between an inner peripheral end edge portion 36 of a plate-shaped supporting piece 35 such as an outer case and a rotation shaft 37, and the original configuration (refer to Figure 6A) of the curved portion 33 can not be maintained thereby. It is difficult to keep stable sealing ability for a long period of time with these local abrasion and deviation.

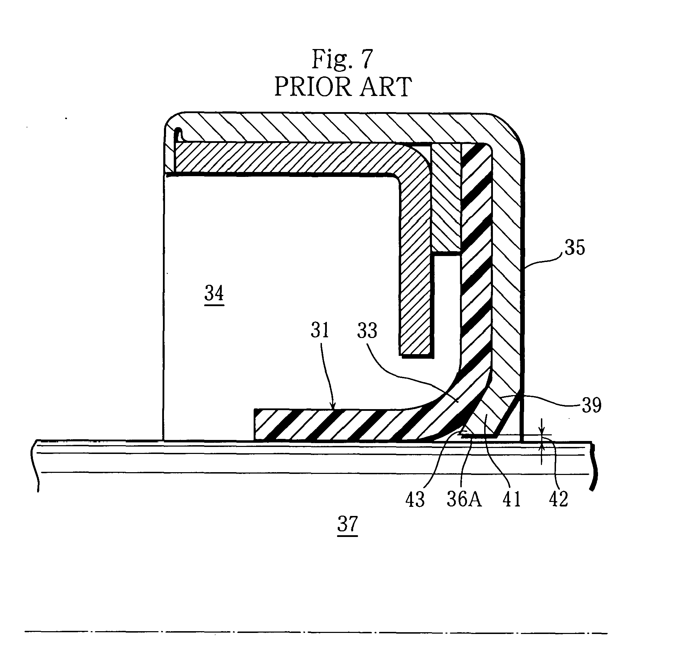

To solve these problems, a rotation shaft seal as shown in Figure 7 is conventionally proposed (a similar seal is disclosed by Figure 6 of Japanese patent provisional publication No. 2005-201336).

In the conventional rotation shaft seal of Figure 7, an outer case (plate-shaped supporting piece) 35 is composed as that an inner peripheral edge 39 has a sloped wall portion 41 approaching a rotation shaft 37 with inclination toward the high-pressure side (the sealed fluid chamber 34 side) to support the curved portion 33 of the seal element 31 from the low-pressure side as to prevent the local deformation in Figure 6B.

However, it is necessary to secure a certain clearance 42 between an inner peripheral face 36A of the sloped wall portion 41 and the rotation shaft 37 for assembly process, and the sloped wall portion 41 has a sharp end portion 43 on the high-pressure side.

Therefore, when high pressure is loaded, the curved portion 33 may deviate from the clearance 42, the sharp end portion 43 may damage the curved portion 33, and working life of the seal may be shortened by generation of abraded powder.

It is therefore an object of the present invention to provide a rotation shaft seal, solving the above-described various conventional problems, with which the curved portion does not generate abnormal local deformation, abrasion, and damage even if high pressure of fluid (gas) works on the seal element composed of PTFE, and excellent sealability is shown for a long period of time.

This object is solved according to the present invention by rotation shaft seal including features of claim 1. Furthermore detailed embodiments are described in the dependent claims 2, 3, 4, and 5.

The present invention will be described with reference to the accompanying drawings in which:

Figure 1 is a cross-sectional view of a principal portion showing an embodiment of the present invention;

Figure 2 is an enlarged cross-sectional explanatory view of a principal portion;

Figure 3A is an explanatory view of function of the present invention;

Figure 3B is an explanatory view of function of a conventional example;

Figure 3C is an explanatory view of function of a comparison example;

Figure 4 is an enlarged cross-sectional view of a principal portion showing another embodiment;

Figure 5 is an enlarged cross-sectional view of a principal portion;

Figure 6A is a cross-sectional view showing a conventional example;

Figure 6B is a cross-sectional view showing the conventional example; and

Figure 7 is an enlarged cross-sectional view showing another conventional example.

Preferred embodiments of the present invention will now be described with reference to the accompanying drawings.

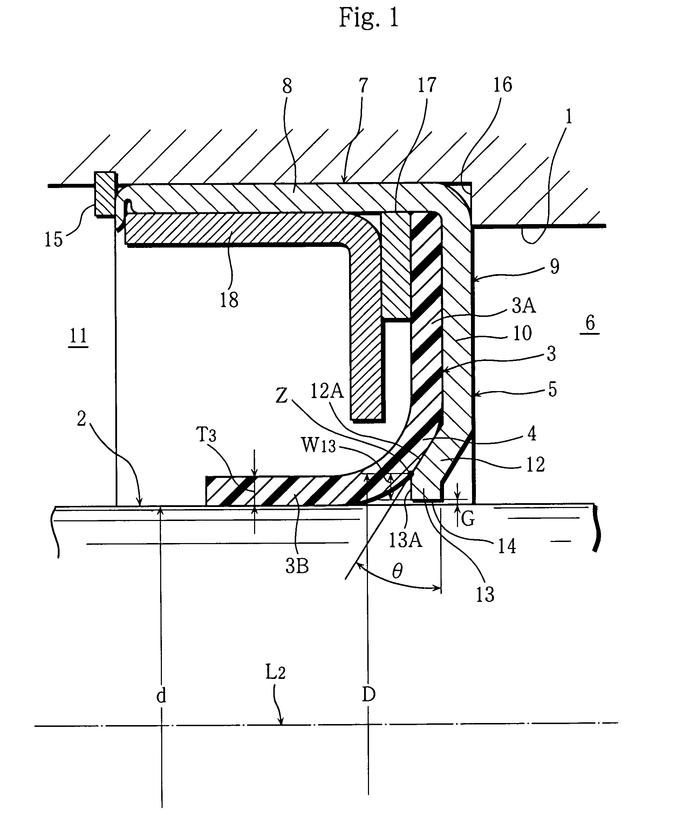

Figures 1, 2, 3A show an embodiment of a rotation shaft seal relating to the present invention which is attached between a housing 1 and a rotation shaft 2.

A mark 3 represents a plate-shaped seal element composed of resin such as PTFE attached with a curved portion 4 as an L-shaped curve. That is to say, as shown in Figure 1. in a cross section cut by a plane including an axis $L_2$ of the rotation shaft 2, the seal element 3 is L-shaped composed of an axis-orthogonal portion 3A, the curved portion 4, and a cylinder portion 3B (parallel to the axis $L_2$).

A mark 5 represents a plate-shaped supporting piece supporting the seal element 3 from a low-pressure side 6. The supporting piece 5 is composed of a part of an outer case 7 fit to the housing 1 in Figure 1. That is to say, the outer case 7 is composed of a cylinder portion 8 for fitting the housing and a radial wall portion 9 at right angles with the axis, and the latter (the radial wall portion 9) composes the supporting piece 5.

The supporting piece 5 is provided with an axis-orthogonal wall portion 10, a sloped wall portion 12 of which inner peripheral side inclines toward a high-pressure side 11 for a predetermined inclination angle θ, and an inner peripheral end flat wall portion 13 at right angles with the axis serially from the outer peripheral side to the inner peripheral side.

The inner peripheral end flat wall portion 13 at right angles with the axis has a dimension $W_{13}$ in radial direction approximately equal to a thickness dimension $T_3$ of the seal element 3.

In the sloped wall portion 12 and the inner peripheral end flat wall portion 13, faces 12A and 13A facing (or in contact with) the seal element 3 are especially important. In the cross-sectional view shown in Figure 1, a dimension from an intersection point Z of the sloped face 12A and the flat face 13A to an innermost peripheral end face 14 of the inner peripheral end flat wall portion 13 is the dimension $W_{13}$ in radial direction.

And, the innermost peripheral end face 14 is disposed near the rotation shaft 2 as to form a micro gap G between the inner peripheral end flat wall portion 13 and the rotation shaft 2.

The micro gap G is set to be 0.1mm to 0.25mm (on one side). When the gap G is less than the minimum value, the innermost peripheral end face 14 may contact the rotation shaft 2 in assembly process or by working tolerance. To the contrary, when the gap G is more than the maximum value, the curved portion of the seal element 3 receiving pressure may deviate from the gap G.

When the outer diameter dimension of the inner peripheral end flat wall portion 13 is D, the outer diameter dimension of the rotation shaft 2 is d, and the thickness dimension of the seal element 3 is $T_3$, these are set to fulfill the following formula.

$$d + 1.2T_3 \leqq D \leqq d + 3.0T_3$$

The outer diameter dimension D of the inner peripheral end flat wall portion 13 corresponds to the diameter of the circle drawn by the intersection point Z.

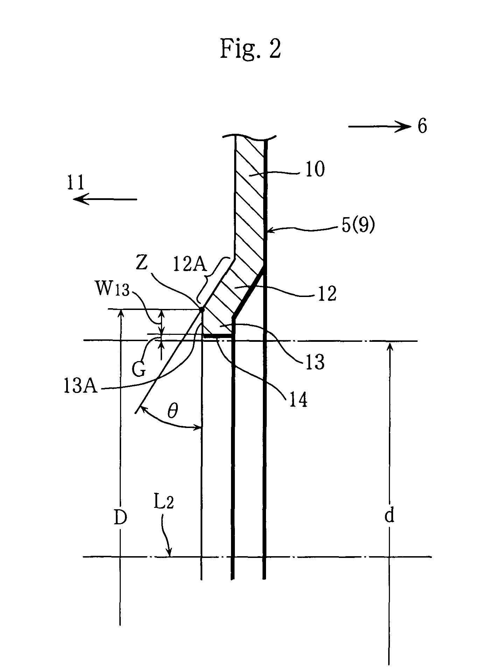

As clearly shown in Figures 1 and 2, D = d + 2 ($W_{13}$ + G), and a relational expression $1.2 \leqq 2(W_{13} + G) \leqq 3.0T_3$ is derived. So a relational expression $0.6T_3 \leqq (W_{13} + G) \leqq 1.5T_3$ is fulfilled when $0.1mm \leqq G \leqq 0.25mm$, and it is preferable to set the position of the intersection point Z according to the relational expression.

To explain the entire schema of Figure 1, in this rotation shaft seal, the outer case 7 is fit to a hole portion on the housing 1 and positioned along the axis direction by, for example, a staged portion 16 and a stopping ring 15.

The seal element 3, a spacer 17 of flat ring, and an inner case 18 are serially fit into the outer case 7 having an approximately L-shaped cross section, and unitedly assembled by caulking of an end side (an end portion on the high-pressure side 11) of the cylinder portion 8 of the outer case 7.

The seal element 3 is of flat ring before the rotation shaft 2 is inserted (i.e. in unattached state), and having L-shaped cross section in which the cylinder portion 3B contacts the rotation shaft 2 when the rotation shaft 2 is inserted (in attached state of Figure 1). Although not shown in Figures, a spiral groove is formed on the contact face as to make pumping effect to push the sealed fluid back to the high-pressure side 11. The material for the seal element 3 is plastic such as PTFE.

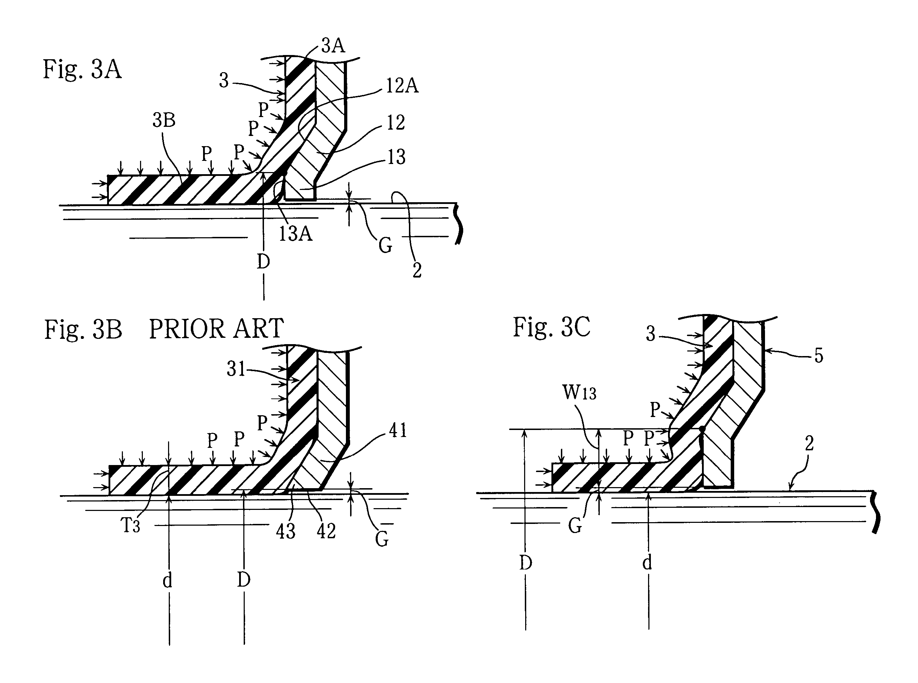

As shown in Figure 1, a peripheral end edge of the seal element 3 is held and fixed by the spacer 17 and the axis-orthogonal wall portion 10. And, a back face (on the low-pressure side) of the seal element 3 contacts a high-pressure side face of the axis-orthogonal wall portion 10 of the outer case 7 and the high-pressure side face 12A of the sloped wall portion 12 to be held. It is preferable to maintain a state in which the high-pressure side face 13A of the flat wall portion 13 slightly contacts the seal element under a normal pressure-receiving state shown in Figure 3A.

And, the inclination angle θ of the sloped wall portion 12 is set to be 20° to 40 ° (in Figures 1, 2, and 5), namely, $20° \leqq θ \leqq 40°$.

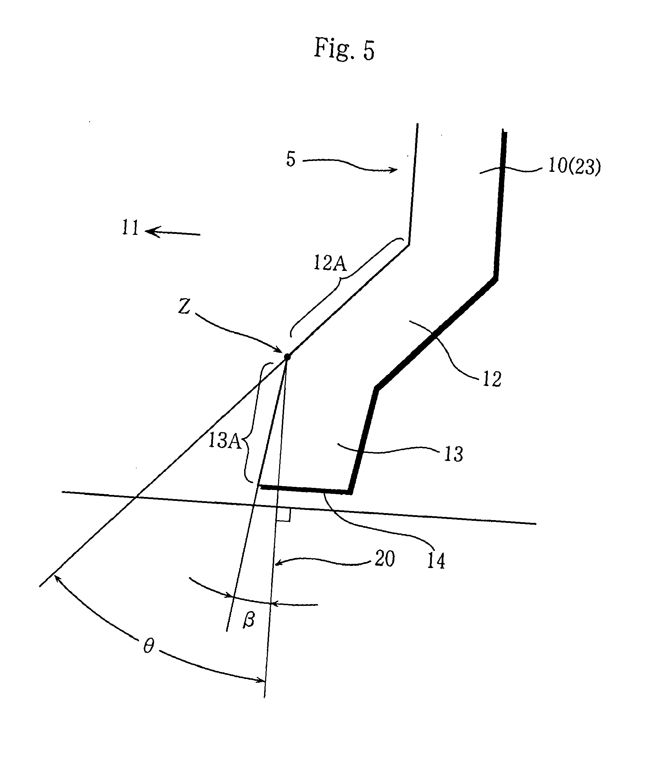

Further, an angle β with which the inner peripheral end flat wall portion 13 becomes an axis-orthogonal face 20 (refer to Figures 5) is set to be - 5 ° to + 5°, namely, $- 5 ° \leqq β \leqq + 5°$.

Being at right angles with the axis means the inner peripheral end flat wall portion 13 is within the range of the angle β. When the angle β is plus, the flat wall portion 13 inclines toward the high-pressure side 11. When β<(- 5 °), local abnormal deformation is generated on the back side of the seal element 3. On the contrary, when β> + 5 °, the problem of the end portion 43, described with the conventional example in Figure 7, is generated.

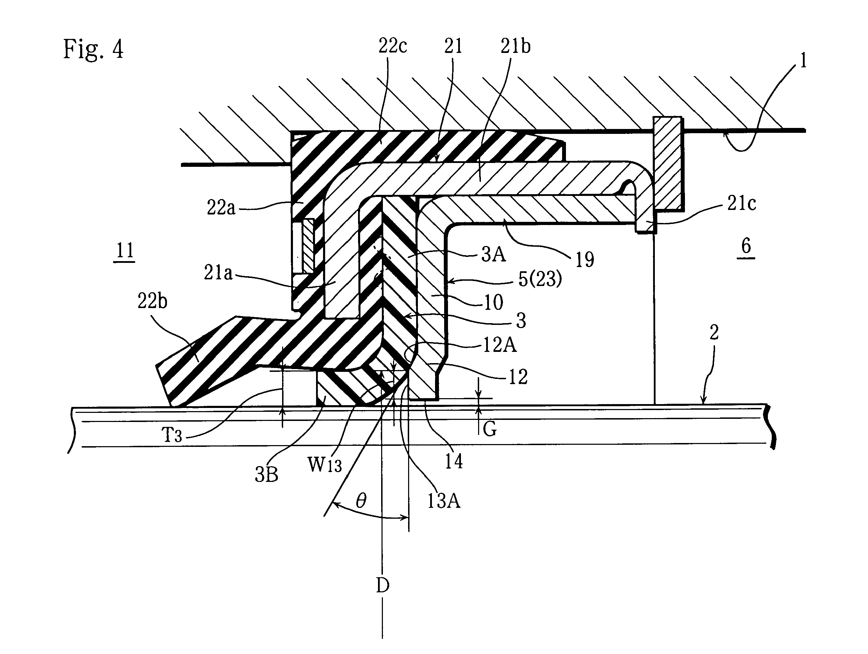

Next, Figure 4 shows another embodiment in which the plate-shaped supporting piece 5 may be composed of a part of an inner case 19.

In Figure 4, an outer case 21 has a cylinder portion 21b, an inner brim portion 21a on the high-pressure side, and a caulking portion 21c. A rubber portion 22, composed of a U-shaped rubber portion 22a covering the inner brim portion 21a on the high-pressure side of the outer case 21, a rubber lip portion 22b extending to the high-pressure side 11 and sliding on the rotation shaft 2, and a periphery-covering rubber layer portion 22c fit to the inner peripheral face of the housing 1, is unitedly fixed to the outer case 21 with adhesive.

The seal element 3 is held by the inner brim portion 21a of the outer case 21 and an axis-orthogonal wall portion 23 of the inner case 19 with a part of the U-shaped rubber portion 22a.

The axis-orthogonal wall portion 23 of the inner case 19 is corresponding to the plate-shaped supporting piece 5.

The composition of configuration and dimension of the plate-shaped supporting piece 5 in the embodiment shown in Figure 4 is not explained because it is similarly composed as in the embodiment described with Figures 1, 2, and 5 (same marks represent same members).

Next, function (effect) of the main composition of the present invention is explained with Figures 3A through 3C. Figure 3A shows a pressure-receiving state in the embodiment of the present invention in former-described Figures 1 and 2 (or Figure 4). The seal element 3 moderately deforms when receiving pressure P, and deformation and damage are not generated. That is to say, the seal element 3 is certainly received by the high-pressure side face 12A of the sloped wall portion 12, and the high-pressure side face 13A of the flat wall portion 13 near the rotation shaft 2 receives with light contact (low contact pressure). So abnormal local deformation is prevented and damage is not caused.

However, Figure 3B shows a case in which the flat wall portion 13 in Figure 3A does not exist as expressed by D = d + 2G corresponding to the conventional example of Figure 7. The seal has short life because the seal element 31 may be damaged by the sharp end portion 43 of the sloped wall portion 41 and deviation may be generated on the clearance 42 in the pressure-receiving state in which the pressure P works. This is a problem generated in a case of $D < d + 1.2T_3$.

And, as shown in Figure 3C, in case of $D > d + 3.0T_3$, the seal element 3 is bent (flexed) at several portions. This causes deformation and camber, and local abnormal heating and abrasion are generated thereby.

Therefore, in comparison of Figure 3A with Figures 3B and 3C, it is important to fulfill the formulas $d + 1.2T_3 \leqq D \leqq d + 3.0T_3$ and $0.1mm \leqq G \leqq 0.25mm$. In other words, balance between deviation(prevention) and deformation of the seal element 3 (of PTFE) is made well by fulfillment of the above formulas, influence against the sealing face, namely, lateral movement of the sealing face and angle change in a screw groove (the spiral groove), is small because creep (deviation) vertical to the thickness direction of the seal element 3 is not generated, and excellent sealability can be kept thereby.

In the present invention, not restricted to the above-described embodiments shown in Figures and modifiable to various designs, more than two seal elements 3 and more than two rubber lip portions 22b in Figure 4 may be provided. Especially, the outer case 7 or the inner case 19 may be the plate-shaped supporting piece 5. And, the sloped wall portion 12 and the inner peripheral end flat wall portion 13, other than straight in cross section, may be arc-shaped having a large radius of curvature. And, the manufacturing method of the plate-shaped supporting piece 5, not restricted to sheeting as shown in Figures, may be cutting or forging. And, the plate-shaped supporting piece 5, not restricted to metal, may be preferably made of plastic.

The following numbered paragraphs set forth several embodiments of the invention, as in addition to the ones disclosed above.

## EMBODIMENTS

1. A seal for a rotating shaft, the seal, as viewed in a cross-sectional plane cut along and including an axis ($L_2$) of rotation of the rotating shaft (2), comprising a construction in which a plate-shaped supporting piece (5) supports on a low-pressure side (6) a seal element (3) having a curved L-shaped portion (4), the supporting piece (5) having

a wall portion (10) orthogonal to the axis ($L_2$) of the rotating shaft (2),

a sloped wall portion (12) the inner peripheral side of which inclines with a predetermined inclination angle ($\theta$) toward a high-pressure side (11), and

an inner peripheral flat end wall portion (13) the inner peripheral side of which is at an approximately right angle with the axis ($L_2$) of the rotating shaft (2) and extends in the radial direction over a dimension ($W_{13}$) approximately equal to a wall thickness dimension ($T_3$) of the seal element (3) from a radially outer side to a radially inner side,

a peripherally innermost end face (14) of the inner peripheral flat end wall portion (13) being disposed so near the rotating shaft (2) that a micro gap (G) is formed between the inner peripheral flat end wall portion (13) and the rotating shaft (2).

2. The seal as set forth in embodiment 1, wherein the inclination angle ($\theta$) of the sloped wall portion (12) is between including 20° and 40°.

3. The seal as set forth in embodiment 1 or 2, wherein an angle ($\beta$) formed by the inner peripheral side of the inner peripheral flat end wall portion (13) and a face (20) orthogonal to the axis ($L_2$) of the rotating shaft (2) is between including -5° and +5°.

4. The seal as set forth in any of embodiments 1 to 3, wherein the micro gap (G) is between including 0.1 mm and 0.25 mm in radius.

5. The seal as set forth in any of embodiments 1 to 4 wherein a relational expression $d + 1.2T_3 \leq D \leq d + 3.0T_3$ is fulfilled, in which D represents an outer diameter dimension of the inner peripheral side of the inner peripheral flat end wall portion (13), d represents an outer diameter dimension of the rotating shaft (2), and $T_3$ represents the wall thickness dimension of the seal element (3) adjacent the rotating shaft.

6. The seal as set forth in any of embodiments 1 to 5, wherein the curved L-shape of the seal element (3) is composed of a portion (3A) orthogonal to the axis ($L_2$) of the rotating shaft (2) and a cylinder portion (3B) parallel to the axis ($L_2$) of the rotating shaft (2), the two portions (3A, 3B) being connected by a curved portion (4).

7. The seal as set forth in any of embodiments 1 to 6, wherein the seal element (3) has a constant wall thickness ($T_3$).

8. The seal as set forth in any of embodiments 1 to 7, wherein the seal element (3) is supported against the supporting piece (5) by means of either a flat, ring-shaped spacer (18) and preferably further an inner case (18), or by means of an outer case (21) received in the U of a U-shaped rubber portion (22).

**Claims**

1. A rotation shaft seal comprising a construction in which a plate-shaped supporting piece (5), supporting a seal element (3) attached with an L-shaped curved portion (4) from a low-pressure side (6) in a cross section cut by a plane including an axis ($L_2$) of a rotation shaft (2), has an axis-orthogonal wall portion (10), a sloped wall portion (12) of which inner peripheral side inclines with a predetermined inclination angle($\theta$) toward a high-pressure side (11), and an inner peripheral end flat wall portion (13), at right angles with the axis ($L_2$), of which dimension ($W_{13}$) in radial direction is approximately same as a thickness dimension ($T_3$) of the seal element (3) from an outer side to an inner side, and, an innermost peripheral end face (14) of the inner peripheral end flat wall portion (13) is disposed near the rotation shaft (2) as to form a micro gap (G) between the inner peripheral end flat wall portion (13) and the rotation shaft (2).

2. The rotation shaft seal as set forth in claim 1, wherein the inclination angle ($\theta$) of the sloped wall portion (12) is set to be 20 ° to 40 ° , and an angle ($\beta$) formed by the inner peripheral end flat wall portion (13) and an axis-orthogonal face (20) is set to be - 5 ° to +5 ° .

3. The rotation shaft seal as set forth in claim 1 or claim 2, wherein the micro gap (G) is set to be 0.1mm to 0.25mm on one side.

4. The rotation shaft seal as set forth in claim 1 or claim 2, wherein a relational expression $d + 1.2T_3 \leqq D \leqq d + 3.0T_3$ is fulfilled when the mark (D) represents an outer diameter dimension of the inner peripheral end flat wall portion (13), the mark (d) represents an outer diameter dimension of the rotation shaft (2), and the mark ($T_3$) represents the thickness dimension of the seal element (3).

5. The rotation shaft seal as set forth in claim 3, wherein a relational expression $d + 1.2T_3 \leqq D \leqq d + 3.0T_3$ is fulfilled when the mark (D) represents an outer diameter dimension of the inner peripheral end flat wall portion (13), the mark (d) represents an outer diameter dimension of the rotation shaft (2), and the mark ($T_3$) represents the thickness dimension of the seal element (3).

# Fig. 1

Fig. 2

EP 2 053 287 A1

Fig. 3A

Fig. 3B   PRIOR ART

Fig. 3C

Fig. 4

EP 2 053 287 A1

# Fig. 5

Fig. 6A
PRIOR ART

Fig. 6B
PRIOR ART

## Fig. 7
## PRIOR ART

34

35

31 33

39

43 36A 41 42

37

Europäisches
Patentamt

European
Patent Office

Office européen
des brevets

## EUROPEAN SEARCH REPORT

Application Number

EP 08 01 5692

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 598 579 A (EAGLE INDUSTRY) 23 November 2005 (2005-11-23) * abstract; figures 1,6,7,9,11,13 * ----- | 1-4 | INV. F16J15/32 |
| X | EP 1 612 460 A (EAGLE INDUSTRY) 4 January 2006 (2006-01-04) * abstract; figures * ----- | 1-4 | |

TECHNICAL FIELDS
SEARCHED      (IPC)

F16J

The present search report has been drawn up for all claims

| Place of search | Date of completion of the search | Examiner |
|---|---|---|
| The Hague | 6 January 2009 | Narminio, Adriano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 08 01 5692

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2009

| Patent document cited in search report | | Publication date | Patent family member(s) | | Publication date |
|---|---|---|---|---|---|
| EP 1598579 | A | 23-11-2005 | CN | 1751195 A | 22-03-2006 |
| | | | WO | 2004076894 A1 | 10-09-2004 |
| | | | KR | 20050103469 A | 31-10-2005 |
| | | | US | 2006290069 A1 | 28-12-2006 |
| EP 1612460 | A | 04-01-2006 | CN | 1771406 A | 10-05-2006 |
| | | | WO | 2004090391 A1 | 21-10-2004 |
| | | | KR | 20060002943 A | 09-01-2006 |
| | | | US | 2006208428 A1 | 21-09-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003194231 A

- JP 2005201336 A